# EUROPEAN PATENT APPLICATION

(11) **EP 4 773 324 A1**
(43) Date of publication of application: **08.07.2026**
(21) Application number: 24859933.4
(22) Date of filing: 29.08.2024
(51) Int. Cl.: H01M 10/0587, H01M 50/414, H01M 50/443, H01M 50/446, H01M 50/449, H01M 50/46, H01M 50/463, H01M 50/474, H01M 50/486, H01M 50/489

(54) **LITHIUM SECONDARY BATTERY**

(30) Priority: 31.08.2023 JP 2023141238
(71) Applicant: Panasonic Intellectual Property Management Co., Ltd., Kadoma-shi, Osaka 571-0057 (JP)
(72) Inventor: KONDO, Shinichiro, Kadoma-shi, Osaka 571-0057 (JP); MIYAMAE, Ryohei, Kadoma-shi, Osaka 571-0057 (JP); KANO, Akira, Kadoma-shi, Osaka 571-0057 (JP)
(74) Representative: Novagraaf International SA
(86) International application number: PCT/JP2024/031062
(87) International publication number: WO 2025/047908

(57) **Abstract**

A lithium secondary battery includes: an electrode group including a positive electrode, a negative electrode, and a separator disposed between the positive electrode and the negative electrode; and a non-aqueous electrolyte. In the negative electrode, lithium metal is deposited during charging, and the lithium metal is dissolved in the non-aqueous electrolyte during discharging. The separator includes a sheet-shaped substrate, and a spacer disposed on a principal surface of the substrate. The spacer includes a protruding portion, an end portion of the positive electrode includes a portion A overlapping the protruding portion. An insulating layer is disposed between at least part of the portion A and the negative electrode.

## Description

### [Technical Field]

The present disclosure relates to a lithium secondary battery.

### [Background Art]

A lithium ion battery is known as a non-aqueous electrolyte secondary battery having a high capacity. As a non-aqueous electrolyte secondary battery having a higher capacity than the lithium ion battery, a lithium secondary battery (lithium metal secondary battery) is promising. In the lithium secondary battery, lithium metal is deposited on a negative electrode during charging, and the lithium metal is dissolved during discharging and released as lithium ions into the non-aqueous electrolyte.

Since the lithium metal is deposited on the negative electrode during charging in the lithium secondary battery, it is necessary to provide a spacer between a substrate of a separator and the electrodes to secure a space for lithium to be deposited.

Patent Literature 1 proposes a "lithium secondary battery comprising: a positive electrode; a negative electrode; a separator disposed between the positive electrode and the negative electrode; and a non-aqueous electrolyte having lithium ion conductivity, wherein lithium metal is deposited on the negative electrode during charging, and the lithium metal is dissolved from the negative electrode during discharging, a spacer is provided between the separator and at least one of the positive electrode and the negative electrode, a first length of the separator in a first direction D1 is shorter than a second length of the separator in a second direction D2 intersecting the first direction D1, and in a cross section of the spacer taken along a thickness direction of the separator and the first direction D1, at least one of a spacer-side angle between the separator and the spacer and a spacer-side angle between the spacer and the electrode in contact with the spacer is greater than 90°".

### [Citation List]

### [Patent Literature]

Patent Literature 1: WO 2021/192645

### [Summary of Invention]

### [Technical Problem]

Stress caused by the Li deposition in the negative electrode may be locally concentrated in the vicinity of an overlapping portion between an end portion of the positive electrode and the protruding portions (spacer), and this may cause damage to the substrate, resulting in an internal short circuit.

### [Solution to Problem]

An aspect of the present disclosure relates to a lithium secondary battery including: an electrode group including a positive electrode, a negative electrode, and a separator disposed between the positive electrode and the negative electrode; and a non-aqueous electrolyte, wherein, in the negative electrode, lithium metal is deposited during charging, and the lithium metal is dissolved in the non-aqueous electrolyte during discharging, the separator includes a sheet-shaped substrate, and a spacer disposed on a principal surface of the substrate, the spacer includes a protruding portion, an end portion of the positive electrode includes a portion A overlapping the protruding portion, and an insulating layer is disposed between at least part of the portion A and the negative electrode.

### [Advantageous Effects of Invention]

According to the present disclosure, it is possible to suppress the occurrence of an internal short circuit of a lithium secondary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A vertical cross-sectional view schematically showing an example of a lithium secondary battery according to an embodiment of the present disclosure.
[FIG. 2] A cross-sectional view schematically showing relevant parts of the lithium secondary battery shown in FIG. 1.
[FIG. 3] A schematic top view of a positive electrode in a wound electrode group as viewed from the direction of a winding axis thereof.
[FIG. 4] A top view showing an example of a spacer.
[FIG. 5] A schematic cross-sectional view showing the vicinity of a winding start end portion of the positive electrode of the wound electrode group.

### [Description of Embodiment]

In the following, an embodiment of the present disclosure will be described by way of examples. However, the present disclosure is not limited to the examples described below. Although examples of specific numerical values and materials may be given in the following description, other numerical values and materials may be used as long as the effects of the present disclosure can be achieved. In the present specification, the expression "a numerical value A to a numerical value B" includes the numerical value A and the numerical value B, and can be replaced with "a numerical value A or more and a numerical value B or less." In the case where lower limits and upper limits are given as examples for numerical values relating to specific physical properties or conditions in the following description, any of the given lower limits and any of the given upper limits can be freely combined as long as the lower limit is not greater than or equal to the upper limit. When a plurality of materials are given as examples, one of the materials may be selected and used alone, or two or more of the materials may be used in combination.

### (Lithium Secondary Battery)

A lithium secondary battery according to an embodiment of the present disclosure includes a positive electrode, a negative electrode, a separator disposed between the positive electrode and the negative electrode, and a non-aqueous electrolyte. The positive electrode includes, for example, a positive electrode current collector, and a positive electrode mixture layer supported on one or both surfaces of the positive electrode current collector. In the negative electrode, lithium metal is deposited during charging, and the lithium metal is dissolved in the non-aqueous electrolyte during discharging. Specifically, the negative electrode includes at least a negative electrode current collector, and the lithium metal is deposited on the negative electrode current collector during charging. The non-aqueous electrolyte has lithium ion conductivity. A lithium secondary battery is also called a lithium metal secondary battery.

For example, about 70% or more of the rated capacity of a lithium secondary battery is developed through deposition and dissolution of lithium metal. The transfer of electrons in the negative electrode during charging and discharging is mainly caused by deposition and dissolution of lithium metal in the negative electrode. Specifically, 70 to 100% (e.g., 80 to 100% or 90 to 100%) of the transfer of electrons (from another perspective, current) in the negative electrode during charging and discharging is caused by deposition and dissolution of lithium metal. That is, the negative electrode of the lithium secondary battery differs from a negative electrode in which the transfer of electrons in the negative electrode during charging and discharging is mainly caused by absorption and desorption of lithium ions by a negative electrode active material (e.g., graphite).

The separator includes a sheet-shaped substrate, and a spacer disposed on a principal surface of the substrate. The spacer includes protruding portions. An end portion of the positive electrode (positive electrode mixture layer) includes a portion A that overlaps the protruding portions. An insulating layer is disposed between at least part of the portion A and the negative electrode. The insulating layer is disposed so as to cover the at least part of the portion A of the positive electrode (or the at least part of the portion A of the positive electrode and portions therearound).

In the vicinity of the portion A, the thickness of the deposited Li may be locally increased, and the stress caused by the Li deposition may be locally concentrated. To deal with this, according to the present disclosure, the above-described insulating layer is placed. The placement of the insulating layer makes it possible to suppress the Li deposition in the vicinity of the portion A. In addition, the placement of the insulating layer enables a larger space to be secured between the positive electrode and the negative electrode around the portion A. Therefore, even if the thickness of the deposited Li in the vicinity of the portion A is locally increased, the stress caused by the Li deposition can be reduced. Accordingly, the placement of the insulating layer makes it possible to suppress concentration of stress in the vicinity of the portion A, thus suppressing the damage to the substrate due to such concentration of stress, and the occurrence of an internal short circuit due to the damage caused to the substrate.

A positive electrode, a negative electrode, and a separator may be collectively referred to as an "electrode group". The lithium secondary battery may include a wound electrode group obtained by winding a band-shaped positive electrode and a band-shaped negative electrode with a separator (substrate) interposed therebetween. The lithium secondary battery may include a stacked electrode group obtained by stacking a positive electrode and a negative electrode with a separator (substrate) interposed therebetween.

Usually, in a lithium secondary battery, the area of a negative electrode that opposes a positive electrode is larger than the area of the positive electrode, and the negative electrode is disposed so as to oppose the entirety of one or both principal surfaces (positive electrode mixture layer or layers formed on one or both principal surfaces of the positive electrode) of the positive electrode with a separator interposed therebetween.

The negative electrode, the separator, and the insulating layer may be disposed on both sides of the positive electrode, or may be disposed on one side of the positive electrode. In the case of a wound electrode group, the negative electrodes, the separators, and the insulating layers are disposed on both sides (the outer circumferential side and the inner circumferential side) of the positive electrode. The spacers disposed on both sides (the outer circumferential side and the inner circumferential side) of the positive electrode may be disposed so as to overlap each other with the positive electrode interposed therebetween, or may be disposed so as to be entirely or partially displaced from each other. The insulating layers disposed on both sides (the outer circumferential side and the inner circumferential side) of the positive electrode may be disposed so as to overlap each other with the positive electrode interposed therebetween, or may be disposed so as to be entirely or partially displaced from each other. The spacers disposed on both sides (the outer circumferential side and the inner circumferential side) of the positive electrode may be arranged in the same pattern, or may be arranged in different patterns.

When the lithium secondary battery includes a wound electrode group, the end portion of the positive electrode includes a winding start end portion of the positive electrode. At least part of the portion A is a portion *a* corresponding to the winding start end portion of the positive electrode, and it is preferable that the insulating layer is disposed between at least the portion *a* and the negative electrode. Preferably, the insulating layer is disposed between the portion *a* and the separator. In this case, the spacer (protruding portions) may be disposed on a principal surface of the substrate on the positive electrode side.

In the case of a wound electrode group, it is preferable that the insulating layer has a dimension in the width direction of the positive electrode that is larger than the dimension of the positive electrode in the width direction. Preferably, the insulating layer is disposed so as to protrude from the winding start end portion of the positive electrode. Preferably, the insulating layer is disposed so as to entirely cover the winding start end portion of the positive electrode.

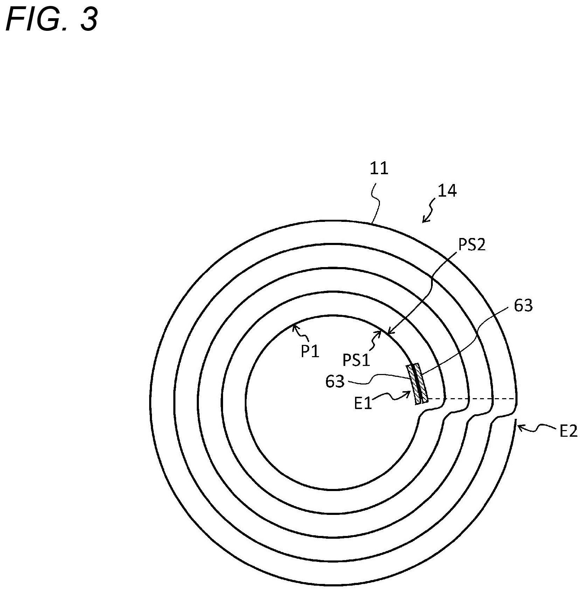

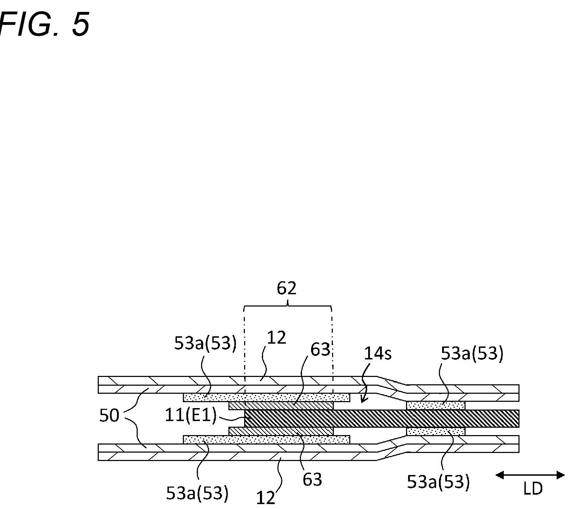

In a portion where the insulating layer is disposed, Li deposition is suppressed during charging. Accordingly, it is desirable that the insulating layer is disposed, efficiently and minimally, on a portion of the portion A where concentration of stress is particularly likely to occur (e.g., in the case of a wound electrode group, the portion *a* corresponding to the winding start end portion of the positive electrode). The width of the end portion of the positive electrode (the length of the end portion E1 (portion 62) of the positive electrode 11 in the LD direction in FIG. 5) is 1 mm to 10 mm, for example. The winding start end portion (the end portion E1 (portion 62) of the positive electrode 11 in FIG. 5) of the positive electrode is a region corresponding to, for example, 1/10 to 4/10 of the circumference of the innermost circumferential portion (an innermost circumferential portion P1 of the positive electrode 11 in FIG. 3) of the positive electrode.

### (Insulating Layer)

The insulating layer may be disposed between the positive electrode (positive electrode mixture layer) and the separator, or may be disposed between the negative electrode and the separator. The insulating layer may be disposed near the protruding portions of the separator, or may be disposed near the substrate of the separator.

Preferably, the insulating layer includes a resin material. As the resin material included in the insulating layer, it is possible to use those illustrated as the resin materials included in a spacer described below. More preferably, the insulating layer includes a resin material that is highly flexible and readily deformed. In this case, any stress generated during expansion of the negative electrode can be further reduced by the deformation of the insulating layer.

The placement of the insulating layer may be performed by attaching an insulating resin film to a predetermined portion of the positive electrode. The resin film may be attached to the positive electrode with an adhesive layer (sticky layer) interposed between the resin film and the positive electrode. Also, the resin film may be attached to a predetermined portion of the substrate or the negative electrode. Examples of the material of the resin film include a polyolefin-based resin and a polyimide-based resin. Examples of the polyolefin-based resin includes polypropylene and polyethylene. The insulating layer may be formed on a predetermined portion of the substrate using the same method as that illustrated for a spacer described below.

From the viewpoint of suppressing the above-described stress concentration, the thickness of the insulating layer is preferably 10 µm or more, and more preferably 40 µm or more. When the thickness of the insulating layer is 10 µm or more (or 40 µm or more), the effect of suppressing the above-described stress concentration by the placement of the insulating layer can be readily achieved. From the viewpoint of reducing the stress generated in the electrode group by the placement of the insulating layer, the thickness of the insulating layer is preferably 150 µm or less, and more preferably 120 µm or less. When the thickness of the insulating layer is 150 µm or less (or 120 µm or less), an increase in the compressive stress inside the electrode group can be readily suppressed by the placement of the insulating layer, so that it is possible to suppress damage to the substrate due to the compressive stress. The preferable range of the thickness of the insulating layer is, for example, 10 µm or more and 150 µm or less.

The total thickness of the insulating layer and the spacer is, for example, 30 µm or more and 250 µm or less. The ratio (insulating layer thickness/spacer thickness) is, for example, 0.1 or more and 10 or less. Note that the thickness of the spacer is the height of each of the protruding portions included in the spacer. The height of the protruding portion is, for example, 10 µm or more and 100 µm or less.

### (Separator)

The separator includes a sheet-shaped substrate, and a spacer disposed on a principal surface of the substrate.

### (Substrate)

For the substrate, a porous sheet having ion permeability and insulating properties can be used. Examples of the porous sheet include a microporous thin film, a woven fabric, and a nonwoven fabric. The material of the porous sheet may be, but is not particularly limited to, a polymer material. Examples of the polymer material include an olefin resin, a polyamide resin, and cellulose. Examples of the olefin resin include polyethylene, polypropylene, and a copolymer of ethylene and propylene. The substrate may include an additive as needed. Examples of the additive include an inorganic filler.

The thickness of the substrate is, but is not particularly limited to, for example, 5 µm or more and 20 µm or less, and more preferably 10 µm or more and 20 µm.

The substrate may include the porous sheet and a composite material layer (heat-resistant layer). The composite material layer may be formed on one principal surface of the porous sheet, or may be formed both principal surfaces thereof. The composite material layer is a layer that is permeable to lithium ions. The composite material layer includes inorganic particles. The composite material layer may include a resin material as needed. The thickness of the composite material layer may be 5% to 50% of the overall thickness of the substrate.

The composite material layer may be disposed on a side of the porous sheet that opposes the positive electrode, or may be disposed on a side of the porous sheet that opposes the negative electrode. In the case where the composite material layer is disposed on the positive electrode side, it is possible to suppress deterioration of the porous sheet due to oxidation reaction. In the case where the composite material layer is disposed on the negative electrode side, it is possible to suppress deterioration of the porous sheet due to reduction reaction. The spacer may be disposed on the composite material layer. In this case, the effect of suppressing the thermal shrinkage of the substrate becomes particularly high.

The inorganic particles are preferably particles of a thermally stable and insulating inorganic compound that is less likely to undergo melting and decomposition at the time of abnormal heat generation caused by short circuiting or the like of a battery. Examples of the material of the inorganic particles include an oxide, a hydroxide, a nitride, a carbide, and a sulfide. Examples of the oxide include aluminum oxide, boehmite, magnesium oxide, titanium oxide, zirconium oxide, silicon oxide, yttrium oxide, and zinc oxide. Examples of the nitride include silicon nitride, aluminum nitride, boron nitride, and titanium nitride. Examples of the carbide include silicon carbide and boron carbide. Examples of the sulfide include barium sulfate. Examples of the hydroxide include aluminum hydroxide. The median diameter in a volume-based particle size distribution of the inorganic particles may be 0.2 to 2.0 µm.

The median diameter in a volume-based particle size distribution of the inorganic particles can be measured, for example, with a laser diffraction/scattering particle size distribution analyzer (e.g., Microtrack manufactured by NIKKISO CO., LTD.). Alternatively, the median diameter may be obtained by observing a cross section of the substrate with a transmission electron microscope (TEM), capturing a TEM image, calculating the area surrounded by the contours of 100 arbitrarily selected inorganic particles, determining the diameter of an equivalent circle (perfect circle) having the same area as the calculated area, and determining an average value of the diameters of 100 equivalent circles as the median diameter.

Examples of the resin material included in the composite material layer (heat-resistant layer) include fluorine-containing resins such as polyvinylidene fluoride (PVdF) and polytetrafluoroethylene, fluorine-containing rubbers such as a vinylidene fluoride-tetrafluoroethylene copolymer and an ethylene-tetrafluoroethylene copolymer, a styrene-butadiene copolymer or a hydride thereof, an acrylonitrile-butadiene copolymer or a hydride thereof, a methacrylic acid ester-acrylic acid ester copolymer, a styrene-acrylic acid ester copolymer, an acrylonitrile-acrylic acid ester copolymer, rubbers such as an ethylene propylene rubber, and polyvinyl acetate, cellulose derivatives such as ethylcellulose, methylcellulose, hydroxy ethylcellulose, and carboxymethyl cellulose, acrylic resins such as an acrylic acid-methacrylic acid copolymer, polyphenylene ether, polysulfone, polyether sulfone, polyphenylene sulfide, polyetherimide, polyimide, polyamides such as a wholly aromatic polyamide (aramid), polyamide imide, polyacrylonitrile, polyvinyl alcohol, polyether, polyacrylic acid, polymethacrylic acid, polyester, polyolefin, a silicone resin, a urethane resin, a melamine resin, a urea resin, and an epoxy resin.

As the resin material included in the composite material layer (heat-resistant layer), it is desirable to use a polymer material having higher heat resistance than the material of the porous sheet. Such a polymer material preferably includes at least one selected from the group consisting of aromatic polyamide, aromatic polyimide, and aromatic polyamide imide. These are known as polymer materials having high heat resistance. In terms of the heat resistance, aramid, i.e., meta-type aramid (meta-type wholly aromatic polyamide) and para-type aramid (para-type wholly aromatic polyamide) are preferred.

The content of the inorganic particles in the composite material layer may be in the range from 50 mass% to 99 mass% (e.g., the range from 85 mass% to 99 mass%).

The composite material layer can be formed, for example, by applying a coating liquid including inorganic particles, a resin material, and a liquid component (dispersing medium) to a porous sheet, and drying the resulting coating film. Examples of the liquid component include N-methyl-2-pyrrolidone.

### (Spacer)

The spacer is formed on a principal surface of the substrate. From the viewpoint of, for example, ease of production of the electrode group, it is preferable that the substrate and the spacer are integrated into a single piece. The spacer may be provided on a principal surface of the substrate that opposes the positive electrode (a principal surface of the substrate on the positive electrode side), may be provided on a principal surface of the substrate that opposes the negative electrode (a principal surface of the substrate on the negative electrode side), or may be provided both principal surfaces thereof. In the case where the spacer is provided on the principal surface of the substrate that opposes the positive electrode, Li is deposited so as to stretch the substrate in the direction of the positive electrode between of the spacers as compared with a case where the spacer is provided on the principal surface of the substrate that opposes the negative electrode. Accordingly, compressive stress is generated in the deposited Li, so that Li is likely to be deposited densely. From the viewpoint of enhancing the discharge efficiency and the cycle characteristics, it is preferable that spacer is provided on the principal surface of the substrate that opposes the positive electrode. On the other hand, in the case where the spacer is provided on the principal surface of the substrate that opposes the negative electrode, a space is formed in advance between the substrate and the negative electrode. Accordingly, the tensile load on the substrate following the Li deposition can be reduced. That is, this is advantageous in that the insulation properties of the substrate can be readily maintained, or that the short circuit resistance of the substrate can be readily maintained.

In a lithium secondary battery, the main role of the spacer is to form a space in which lithium metal is deposited. As a result of the lithium metal being accommodated in the space secured by the spacer, the expansion of the negative electrode during charging can be suppressed.

The spacer may include a resin material (e.g., an insulating resin), or may include a resin material and particles. The proportion of the resin material in the spacer may be 10 vol% or more, 30 vol% or more, or 50 vol% or more, and may be 100 vol% or less, or 80 vol% or less.

Examples of the resin material included in the spacer include fluorine-containing resins such as polyvinylidene fluoride (PVdF) and polytetrafluoroethylene, fluorine-containing rubbers such as a vinylidene fluoride-tetrafluoroethylene copolymer and an ethylene-tetrafluoroethylene copolymer, a styrene-butadiene copolymer or a hydride thereof, an acrylonitrile-butadiene copolymer or a hydride thereof, a methacrylic acid ester-acrylic acid ester copolymer, a styrene-acrylic acid ester copolymer, an acrylonitrile-acrylic acid ester copolymer, rubbers such as an ethylene propylene rubber, and polyvinyl acetate, cellulose derivatives such as ethylcellulose, methylcellulose, hydroxy ethylcellulose, and carboxymethyl cellulose, acrylic resins such as an acrylic acid-methacrylic acid copolymer, polyphenylene ether, polysulfone, polyether sulfone, polyphenylene sulfide, polyetherimide, polyimide, polyamides such as a wholly aromatic polyamide (aramid), polyamide imide, polyacrylonitrile, polyvinyl alcohol, polyether, polyacrylic acid, polymethacrylic acid, polyester, polyolefin, a silicone resin, a urethane resin, a melamine resin, a urea resin, and an epoxy resin.

Among the above-described resin materials, polyimide, polyvinylidene fluoride, an acrylonitrile-acrylic acid ester copolymer, or the like is preferred as a material that is impermeable to lithium ions, and polyimide may be used. A non-porous spacer made of any of these resin materials and having a predetermined height is a layer that is impermeable to lithium ions. From the viewpoint of suppressing an increase in the gas generation reaction rate during an internal short circuit, it is preferable to place such a spacer.

The particles may be inorganic particles or organic particles. Of these, examples of inorganic particles includes of inorganic particles of a metal oxide, a metal hydroxide, a metal nitride, a metal carbide, and a metal sulfide each having insulating properties. Examples of the metal oxide as a preferable material include aluminum oxide (alumina or boehmite), magnesium oxide, titanium oxide (titania), zirconium oxide, and silicon oxide (silica). Examples of the metal hydroxide include aluminum hydroxide. Examples of the metal nitride include silicon nitride, aluminum nitride, boron nitride, and titanium nitride. Examples of the metal carbide include silicon carbide and boron carbide. Examples of the metal sulfide include barium sulfate. Also, minerals such as aluminosilicate, sheet silicate, barium titanate, and strontium titanate may be used. Among these, alumina, silica, titania, and the like are preferably used.

The average particle diameter of the particles may be, but is not particularly limited to, 0.1 µm or more, or 0.5 µm or more, and may be 10 µm or less, 5 µm or less, or 2 µm or less. The average particle diameter can be calculated by the following method. First, a cross section of the spacer in the thickness direction of the separator is photographed with an electron microscope to obtain an image of the cross section. Next, the image is subjected to image processing such as binarization to determine the portions constituted by the particles. Next, the diameter (circle-equivalent diameter) of a circle having the same area as the area of each of the particles is determined, and the arithmetic average of the determined circle-equivalent diameters can be used as the average particle diameter. The arithmetic average can be determined from at least 100 particles, for example. Note that the average particle diameters of other particles included in the electrode plate and the separator can also be determined in the same manner.

When the spacer includes the resin material and the particles, the content of the particles in the spacer is preferably 50 vol% or less. This makes it easier to secure a sufficient strength of the spacer.

The spacer may include linear-shaped protruding portions and/or dot-shaped protruding portions. In one aspect, the linear-shaped protruding portions are ridge-shaped protruding portions. The linear-shaped protruding portions may be disposed intermittently, or may be disposed continuously. The linear-shaped protruding portions may be arranged in a straight line, or may be arranged in a curved line.

The width of each of the linear-shaped protruding portions may be 100 µm or more, or 200 µm or more, and may be 2000 µm or less, or 1000 µm or less.

Preferably, the spacer has a predetermined repeating pattern. That is, it is preferable that the linear-shaped protruding portions are arranged in a predetermined repeating pattern. It is particularly preferable that the linear-shaped protruding portions are arranged in a mesh pattern. The mesh pattern may be a set of polygons. Examples of the mesh pattern include a configuration formed by polygons that are combined so as to share sides with each other. The polygons include a triangle, a quadrangle, a hexagon, and the like. Different kinds of polygons may be combined. The mesh pattern may be a honeycomb pattern. Also, the linear-shaped protruding portions may be arranged in a stripe pattern.

A height H of the spacer (protruding portion) may be greater than a thickness T of the substrate. A ratio H/T of the height H to the thickness T is greater than 1, and may be 1.5 or more, 2 or more, or 3 or more. The H/T may be 10 or less, 8 or less, 5 or less, or 4 or less. By setting the H/T to 1.5 or more, the expansion of the electrode group can be particularly suppressed.

The height H can be measured by the following method. First, a cross section of the separator (substrate) in the thickness direction is photographed with an electron microscope to obtain an image of the cross section. Next, any 20 points of the spacer are selected in the image, and the height of the spacer is measured at each of the points. Next, the measured heights of the 20 points are arithmetically averaged, and the obtained average value is used as the height H. The thickness T can also be measured according to the same procedure.

The spacer can be formed, for example, by applying a coating liquid including components of the spacer and a liquid component to a predetermined portion of the substrate, and drying the resulting coating film. Examples of the liquid component include N-methyl-2-pyrrolidone. The application may be performed using a dispenser or the like, or may be performed using a known printing method such as gravure printing, inkjet printing, and screen printing. In addition, the drying may be performed using a known method such as drying by heating or natural drying.

### (Negative Electrode)

The negative electrode includes a negative electrode current collector. In the lithium secondary battery, lithium metal is deposited on a surface of the negative electrode as a result of charging. More specifically, as a result of charging, lithium ions included in the non-aqueous electrolyte receive electrons on the negative electrode to form lithium metal, and the lithium metal is deposited on the surface of the negative electrode. The lithium metal deposited on the surface of the negative electrode is dissolved as lithium ions into the non-aqueous electrolyte as a result of discharging.

The negative electrode may include a lithium ion absorption layer (layer that develops a capacity through absorption and desorption of lithium ions by the negative electrode active material (graphite or the like)) supported on the negative electrode current collector. In this case, the open circuit potential of the negative electrode in a fully charged state may be 70 mV or less with respect to the lithium metal (dissolution/deposition potential of lithium). When the open circuit potential of the negative electrode in a fully charged state is 70 mV or less with respect to the lithium metal, the lithium metal is present on the surface of the lithium ion absorption layer in a fully charged state. That is, the negative electrode develops a capacity due to the deposition and the dissolution of the lithium metal.

Here, a fully charged state refers to a state in which, when C represents the rated capacity of a battery, the battery is charged to a state of charge of, for example, 0.98 × C or more. The open circuit potential of a negative electrode in a fully charged state may be measured by disassembling the fully charged battery in an argon atmosphere, removing the negative electrode, and assembling a cell using lithium metal as a counter electrode. The non-aqueous electrolyte of the cell may have the same composition as that of the non-aqueous electrolyte included in the disassembled battery.

The lithium ion absorption layer is a layer formed by a negative electrode mixture including the negative electrode active material. The negative electrode mixture may include, in addition to the negative electrode active material, a binder, a thickener, a conductive agent, and so forth.

Examples of the negative electrode active material include a carbonaceous material, a Si-containing material, and a Sn-containing material. The negative electrode may include one negative electrode active material, or may include two or more negative electrode active materials in combination. Examples of the carbonaceous material include graphite, graphitizable carbon (soft carbon), and non-graphitizable carbon (hard carbon).

The conductive material is, for example, a carbon material. Examples of the carbon material include carbon black, acetylene black, Ketjen black, carbon nanotubes, and graphite.

Examples of the binder include a fluorocarbon resin, polyacrylonitrile, a polyimide resin, an acrylic resin, a polyolefin resin, and a rubber-like polymer. Examples of the fluorocarbon resin include polytetrafluoroethylene and polyvinylidene fluoride.

The negative electrode current collector may be any conductive sheet. A foil, a film, or the like can be used as the conductive sheet.

The material of the negative electrode current collector (conductive sheet) may be any conductive material other than lithium metal and a lithium alloy. The conductive material may be a metal material such as a metal and an alloy. The conductive material is preferably a material that does not react with lithium. More specifically, the conductive material is preferably a material that forms neither an alloy nor an intermetallic compound with lithium. Such a conductive material may be, for example, copper (Cu), nickel (Ni), iron (Fe), and alloys including these metal elements, or graphite whose basal surface is exposed preferentially. Examples of the alloys include a copper alloy and stainless steel (SUS). Among these, copper and/or a copper alloy having high conductivity is preferred.

The thickness of the negative electrode current collector is not particularly limited, and is, for example, 5 µm or more and 300 µm or less.

### (Positive Electrode)

The positive electrode includes, for example, a positive electrode current collector, and a positive electrode mixture layer supported on the surface of the positive electrode current collector. The positive electrode mixture layer includes, for example, a positive electrode active material, a conductive material, and a binder. The positive electrode mixture layer may be formed on only one surface of the positive electrode current collector, or may be formed on both surfaces thereof. The positive electrode can be obtained, for example, by applying a positive electrode mixture slurry including the positive electrode active material, the conductive material, and the binder to both surfaces of the positive electrode current collector, and drying the resulting coating films, followed by rolling.

The positive electrode active material is a material that absorbs and desorbs lithium ions. Examples of the positive electrode active material include a lithium-containing transition metal oxide, a transition metal fluoride, a polyanion, a fluorinated polyanion, and a transition metal sulfide. Among these, a lithium-containing transition metal oxide is preferred because of the low manufacturing cost and the high average discharge voltage.

During charging, the lithium contained in the lithium-containing transition metal oxide is released as lithium ions from the positive electrode, and deposited as lithium metal in the negative electrode or the negative electrode current collector. During discharging, the lithium metal is dissolved from the negative electrode to release the lithium ions, which are then absorbed in a composite oxide in the positive electrode. That is, the lithium ions involved in charging and discharging are generally derived from a solute contained in the non-aqueous electrolyte and the positive electrode active material.

Transition metal elements included in the lithium-containing transition metal oxide include Sc, Ti, V, Cr, Mn, Fe, Co, Ni, Cu, Y, Zr, and W. The lithium-containing transition metal oxide may include one transition metal element, or may include two or more transition metal elements. The transition metal element may be Ni, Co, and/or Mn. The lithium-containing transition metal oxide may include one or more typical elements as needed. Examples of the typical element include Mg, Al, Ca, Zn, Ga, Ge, Sn, Sb, Pb, and Bi. The typical element may be Al or the like.

From the viewpoint of achieving a high capacity, preferred among the lithium-containing transition metal oxides is a composite oxide that includes Ni, Co, and/or Mn as transition metal elements, may include Al as an optional component, and has a layered rock-salt crystal structure having a layered structure. In this case, in the lithium secondary battery, the molar ratio: mLi/mM of the total amount mLi of the lithium included in the positive electrode and the negative electrode, to the amount mM of a metal M other than the lithium included in the positive electrode is set to, for example, 1.1 or less.

As the binder, the conductive material, and the like, those illustrated for the negative electrode may be used, for example. The shape and the thickness of the positive electrode current collector can be respectively selected from the shapes and the ranges corresponding to the positive electrode current collector.

Examples of the material of the positive electrode current collector (conductive sheet) include metal materials including Al, Ti, Fe, or the like. The metal materials may be Al, an Al alloy, Ti, a Ti alloy, an Fe alloy, or the like. The Fe alloy may be stainless steel (SUS).

The thickness of the positive electrode current collector is not particularly limited, and is, for example, 5 µm or more and 300 µm or less.

### (Non-Aqueous Electrolyte)

The non-aqueous electrolyte having lithium ion conductivity may be a liquid electrolyte (electrolytic solution), a gel electrolyte, or a solid electrolyte. The liquid electrolyte is, for example, an electrolytic solution including a non-aqueous solvent, and a lithium salt dissolved in the non-aqueous solvent. The concentration of the lithium salt in the electrolytic solution is, for example, 0.5 mol/L or more and 2 mol/L or less. The electrolytic solution may contain a known additive.

The gel electrolyte includes a lithium salt and a matrix polymer, or includes a lithium salt, a non-aqueous solvent, and a matrix polymer. For example, a polymer material that absorbs and gelatinizes the non-aqueous solvent is used as the matrix polymer. Examples of the polymer material include a fluorocarbon, an acrylic resin, a polyether resin, and polyethylene oxide.

For example, materials known for an all-solid-state lithium-ion secondary battery and the like (e.g., an oxide-based solid electrolyte, a sulfide-based solid electrolyte, a halide-based solid electrolyte, etc.) can be used as the solid electrolyte.

The non-aqueous electrolyte in the form of liquid is prepared by dissolving a lithium salt in the non-aqueous solvent. As a result of the lithium salt being dissolved in the non-aqueous solvent, lithium ions and anions are generated.

Examples of the anion include BF₄⁻, ClO₄⁻, PF₆⁻, CF₃SO₃⁻, CF₃CO₂⁻, an imide anion, and an oxalate complex anion. Examples of the imide anion include N(SO₂CF₃)₂⁻, N(CₘF₂ₘ₊₁SO₂)ₓ(CₙF₂ₙ₊₁SO₂)_{y}⁻ (where m and n are each independently an integer of 0 or 1 or more, x and y are each independently 0, 1, or 2, and x + y = 2 is satisfied). The oxalate complex anions may contain boron and/or phosphorus. Examples of the oxalate complex anion include a bis(oxalate)borate anion, a difluoro(oxalate)borate anion (BF₂(C₂O₄)⁻), PF₄(C₂O₄)⁻, and PF₂(C₂O₄)₂⁻. The non-aqueous electrolyte may include one of these anions alone, or may include two or more thereof.

From the viewpoint of suppressing dendritic deposition of lithium metal, the non-aqueous electrolyte preferably includes at least an oxalate complex anion, and in particular, desirably includes the oxalate complex anion including fluorine. Through interaction between lithium and an oxalate complex anion including fluorine, lithium metal can be easily deposited in the form of fine particles in a uniform manner. Accordingly, the local deposition of lithium metal can be easily suppressed. The oxalate complex anion including fluorine may be combined with other anions. Other anions may be PF₆⁻ and/or imide anions.

Examples of the non-aqueous solvent include an ester, an ether, a nitrile, an amide, or halogen-substituted products thereof. The non-aqueous electrolyte may include one of these non-aqueous solvents alone, or may include two or more of them. Examples of the halogen-substituted products include a fluoride.

Examples of the ester include a carbonic acid ester and a carboxylic acid ester. Examples of the cyclic carbonic acid ester include ethylene carbonate, propylene carbonate, and fluoroethylene carbonate (FEC). Examples of the chain carbonic acid ester include dimethyl carbonate (DMC), ethyl methyl carbonate (EMC), and diethyl carbonate. Examples of the cyclic carboxylic acid ester include γ-butyrolactone and γ-valerolactone. Examples of the chain carboxylic acid ester include ethyl acetate, methyl propionate, and methyl fluoropropionate.

Examples of the ether include a cyclic ether and a chain ether. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the non-aqueous electrolyte is, for example, 0.5 mol/L or more and 3.5 mol/L or less. The concentration of the anions in the non-aqueous electrolyte may be 0.5 mol/L or more and 3.5 mol/L or less. The concentration of the oxalate complex anion in the non-aqueous electrolyte may be 0.05 mol/L or more and 1 mol/L or less.

The non-aqueous electrolyte may include an additive. The additive may form a film on the negative electrode. As a result of a film derived from the additive being formed on the negative electrode, production of dendrites can be easily suppressed. Examples of such an additive include vinylene carbonate, FEC, and vinyl ethyl carbonate (VEC).

In the following, an example of a lithium secondary battery according to the present embodiment will be described in detail with reference to the drawings. The above-described constituent elements can be applied to the constituent elements of the lithium secondary battery in the example described below. The constituent elements in the example described below can be changed based on the above descriptions. The matters described below may be applied to the above-described embodiment. In the lithium secondary battery described below, constituent elements that are not essential to the lithium secondary battery according to the present disclosure may be omitted. Note that the scale of the constituent elements has been changed in the following drawings in order to facilitate understanding.

### (Embodiment 1)

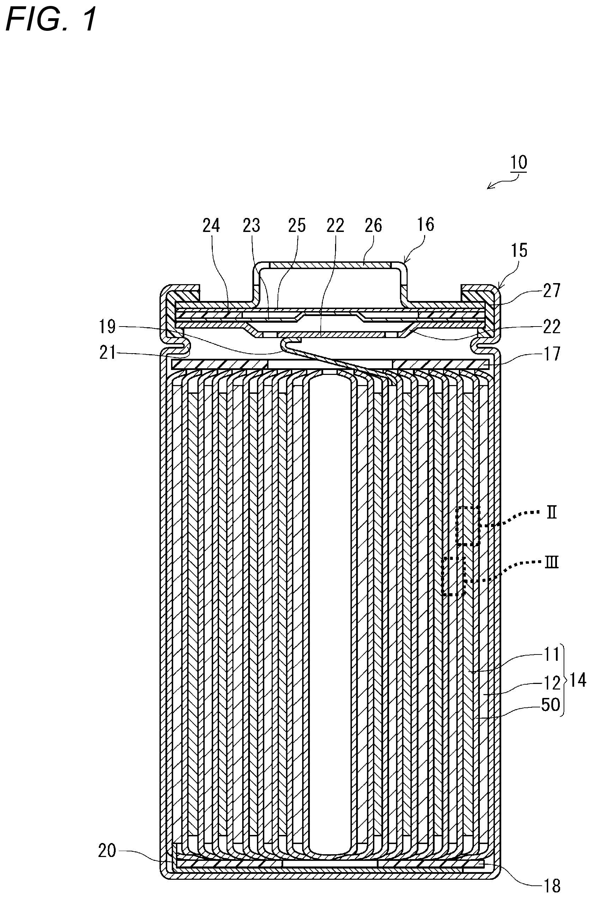

FIG. 1 is a vertical cross-sectional view schematically showing an example of a lithium secondary battery according to Embodiment 1. Note that the illustration of a spacer, and a space defined by the spacer has been omitted from FIG. 1. A cylindrical lithium secondary battery 10 shown in FIG. 1 includes a cylindrical battery case, and a wound electrode group 14 and a non-aqueous electrolyte (not shown) that are accommodated inside the battery case. The battery case includes a case body 15, which is a bottomed cylindrical container made of metal, and a sealing body 16 that seals an opening of the case body 15. A gasket 27 is disposed between the case body 15 and the sealing body 16. The gasket 27 ensures the sealing of the battery case. Inside the case body 15, insulating plates 17 and 18 are respectively disposed at opposite end portions in the direction of the winding axis of the electrode group 14.

The case body 15 includes a stepped part 21 formed, for example, by pressing a portion of a side wall of the case body 15 from outside. The stepped part 21 may be formed in an annular shape on the side wall of the case body 15 along the circumferential direction of the case body 15. In this case, the sealing body 16 is supported by a surface of the stepped part 21 that is located on the opening side.

The sealing body 16 includes a filter 22, a lower valve body 23, an insulating member 24, an upper valve body 25, and a cap 26. In the sealing body 16, these members are stacked in this order. The sealing body 16 is mounted to the opening of the case body 15 such that the cap 26 is located outside of the case body 15, and the filter 22 is located inside of the case body 15. Each of the above-described members constituting the sealing body 16 has, for example, a disk shape or a ring shape. The lower valve body 23 and the upper valve body 25 are connected to each other at their respective central portions, and the insulating member 24 is interposed between their respective peripheral edges. The filter 22 and the lower valve body 23 are connected to each other at their respective central portions. The upper valve body 25 and the cap 26 are connected to each other at their respective central portions. That is, the members other than the insulating member 24 are electrically connected to each other.

A ventilation hole (not shown) is formed in the lower valve body 23. Accordingly, when the internal pressure of the battery case is increased due to abnormal heat generation or the like, the upper valve body 25 bulges toward the cap 26 and moves away from the lower valve body 23. This interrupts the electrical connection between the lower valve body 23 and the upper valve body 25. When the internal pressure is further increased, the upper valve body 25 breaks, allowing gas to be discharged from an opening (not shown) formed in the cap 26.

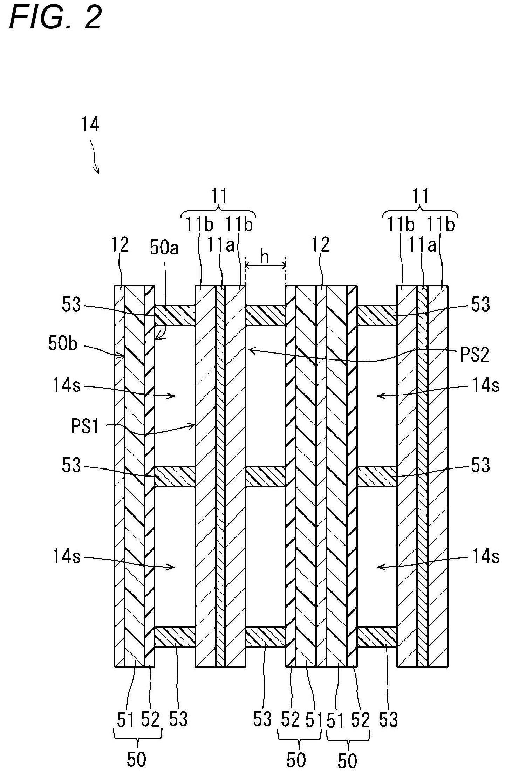

FIG. 2 is an enlarged view of a portion of the electrode group 14. FIG. 2 includes a portion located in the vicinity of the positive electrode and surrounded by region II in FIG. 1, and a portion located in the vicinity of the negative electrode and surrounded by region III in FIG. 1.

The electrode group 14 includes a positive electrode 11, a negative electrode 12, and a separator (substrate 50 and spacer 53). All of the positive electrode 11, the negative electrode 12, and the substrate 50 of the separator are band-shaped. The electrode group 14 is formed by winding the positive electrode 11, the negative electrode 12, and the separator (substrate 50) such that the separator is disposed between the positive electrode 11 and the negative electrode 12.

The positive electrode 11 includes a positive electrode current collector 11a and a positive electrode mixture layer 11b. The positive electrode current collector 11a is electrically connected to the cap 26, which functions as a positive electrode terminal, via a positive electrode lead 19. In FIG. 2, a negative electrode (negative electrode current collector) in a state in which lithium metal has not been deposited is shown as the negative electrode 12. The negative electrode 12 is electrically connected to the case body 15, which functions as a negative electrode terminal, via a negative electrode lead 20.

The substrate 50 includes a principal surface 50a that opposes the positive electrode 11, and a principal surface 50b that opposes the negative electrode 12. The substrate 50 of Embodiment 1 includes a porous sheet 51 and a composite material layer 52 (heat-resistant layer). Of the two principal surfaces of the porous sheet 51, the composite material layer 52 is formed on the principal surface on the negative electrode 12 side. In Embodiment 1, the spacer 53 is formed on the principal surface 50a that opposes the positive electrode 11. The spacer 53 is formed on the composite material layer 52, and is in contact with the positive electrode 11. Spaces 14s are formed between the positive electrode 11 and the negative electrode 12 (between the negative electrode 12 and the substrate 50) by the spacer 53. FIG. 2 shows a height h of the spacer 53.

The spacer 53 is disposed on the principal surface 50a of the substrate 50 on the positive electrode 11 side in FIG. 2, but may be disposed on the principal surface 50b of the substrate 50 on the negative electrode 12 side. The spacer 53 is formed on the composite material layer 52, but may be formed on the porous sheet 51. The composite material layer 52 of the substrate 50 is disposed on the positive electrode 11 side, but may be disposed on the negative electrode 12 side.

In the lithium secondary battery 10, lithium metal is deposited on the negative electrode 12 during charging. Since the spaces 14s exist between the positive electrode 11 and the negative electrode 12, the volume change of the electrode group 14 due to the deposition of the lithium metal is reduced, resulting in improved cycle characteristics.

FIG. 3 is a schematic top view of the positive electrode 11 in the electrode group 14 as viewed from the direction of the winding axis thereof. FIG. 3 shows a state in which the positive electrode 11 has been wound in the electrode group 14. In FIG. 3, the illustration of the negative electrode 12 and the separator 50 is omitted.

The band-shaped positive electrode 11 includes a winding start end portion E1 and a winding finish end portion E 2. An insulating layer 63 is disposed on both sides (a principal surface PS1 on the inner circumferential side and a principal surface PS2 on the outer circumferential side) of the end portion E1 of the positive electrode 11.

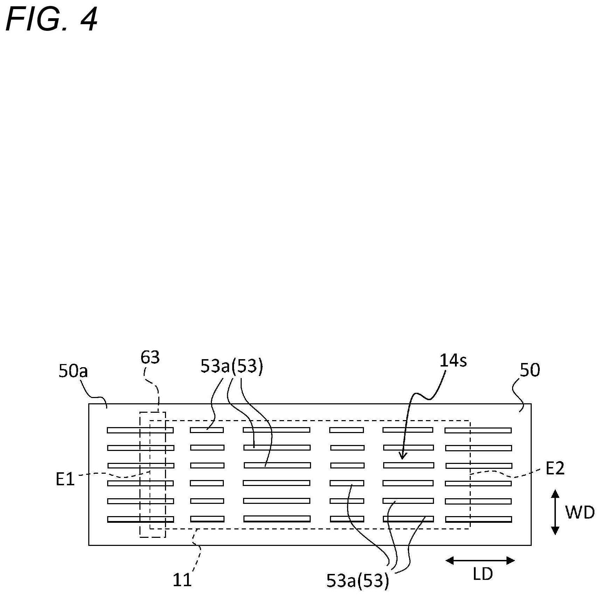

FIG. 4 shows an example of the planar shape of the spacer 53. In plan view, the spacer 53 (linear-shaped protruding portions 53a) is disposed on one of the principal surfaces of the substrate 50. The substrate 50 on which the spacer 53 (protruding portions 53a) is disposed is disposed on the inner circumferential side (principal surface PS1 side) and the outer circumferential side (principal surface PS2 side) of the positive electrode 11. In FIG. 4, the portions of the positive electrode 11 and the insulating layer 63 that oppose the substrate 50 are indicated by the broken lines. In FIG. 4, LD denotes the length direction of the substrate 50 (positive electrode 11), and WD denotes the width direction of the substrate 50 (positive electrode 11). Note that the drawings are schematic diagrams, and the thickness, the ratio between the longitudinal and transverse dimensions of each of the members, and the like do not reflect the actual dimensions, ratio, and the like.

The spacer 53 shown in FIG. 4 includes a plurality of linear-shaped protruding portions 53a that are arranged in stripes. The plurality of linear-shaped protruding portions 53a are arranged so as to be spaced apart from and parallel to each other along the length direction (LD direction) of the band-shaped substrate 50. The region in which no spacer 53 is formed constitutes a space 14s. In FIG. 4, six linear-shaped protruding portions 53a are arranged; however, the number of linear-shaped protruding portions 53a is not limited thereto. The linear-shaped protruding portions 53a are intermittently arranged in the LD direction; however, they may be continuously arranged. In FIG. 4, the spacer is arranged in stripes, the arrangement pattern of the spacer is not limited thereto.

FIG. 5 is a schematic cross-sectional view showing the vicinity of the winding start end portion E1 of the positive electrode 11 in the electrode group 14. In FIG. 5, LD denotes the winding direction (length direction) of the substrate 50 (positive electrode 11).

As shown in FIG. 5, the portion A includes a portion *a* (portion 62 overlapping the protruding portions 53a of the end portion E1 of the positive electrode 11) corresponding to the winding start end portion E1 of the positive electrode 11. The insulating layer 63 is disposed between the portion *a* (portion 62 overlapping the protruding portions 53a of the end portion E1) and the negative electrode 12. The portion 62 is a portion in which the positive electrode mixture layer 11b at the end portion E1 of the positive electrode 11 overlaps the protruding portions 53a.

The insulating layer 63 is disposed between the portion *a* (portion 62) and the separator (substrate 50 and spacer 53). In the portion *a* (portion 62), the positive electrode 11, the insulating layer 63, the protruding portions 53a, the substrate 50, and the negative electrode 12 are arranged in this order.

As shown in FIG. 5, the placement of the insulating layer 63 makes it possible to suppress Li deposition in the vicinity of the portion *a* (portion 62). The placement of the insulating layer 63 enables a larger space 14s to be secured between the positive electrode 11 and the negative electrode 12 around the portion *a* (portion 62). Thus, even if the thickness of the deposited Li is locally increased in the vicinity of the portion *a*, the stress generated by Li deposition can be sufficiently reduced.

As shown in FIG. 4, the dimension of the insulating layer 63 in the WD direction may be larger than the dimension of the positive electrode 11 in the WD direction. As shown in FIGS. 4 and 5, the insulating layer 63 may be disposed so as to protrude to the LD direction side from the winding start end portion E1 (portion 62) of the positive electrode 11. As shown in FIG. 4, the insulating layer 63 may be disposed so as to entirely cover the winding start end portion E1 (portion 62) of the positive electrode 11. By placing the insulating layer 63 in the above-described manner, it is possible to more prominently achieve the effect of suppressing concentration of stress in the vicinity of the portion *a* (portion 62).

Embodiment 1 has described a cylindrical lithium secondary battery including a wound electrode group. However, the lithium secondary battery according to the present embodiment is not limited to the configuration of Embodiment 1, and can be applied to other configurations. The shape of the lithium secondary battery can be appropriately selected from various shapes, including, for example, a cylindrical shape, a coin shape, a prismatic shape, a sheet shape, and a flat shape, according to the use and the like. The configuration of the electrode group is also not particularly limited, and the electrode group may be a stacked electrode group.

### (Supplementary Note)

The above description of the embodiments discloses the following techniques.

### (Technique 1)

A lithium secondary battery including:
an electrode group including a positive electrode, a negative electrode, and a separator disposed between the positive electrode and the negative electrode; and
a non-aqueous electrolyte, wherein,
in the negative electrode, lithium metal is deposited during charging, and the lithium metal is dissolved in the non-aqueous electrolyte during discharging,
the separator includes a sheet-shaped substrate, and a spacer disposed on a principal surface of the substrate,
the spacer includes a protruding portion,
an end portion of the positive electrode includes a portion A overlapping the protruding portion, and
an insulating layer is disposed between at least part of the portion A and the negative electrode.

### (Technique 2)

The lithium secondary battery according to technique 1, including
the electrode group obtained by spirally winding the positive electrode having a band shape and the negative electrode having a band shape with the separator interposed therebetween.

### (Technique 3)

The lithium secondary battery according to technique 2, wherein
the end portion of the positive electrode includes a winding start end portion of the positive electrode,
the at least part of the portion A is a portion *a* corresponding to the winding start end portion of the positive electrode, and
the insulating layer is disposed between at least the portion *a* and the negative electrode.

### (Technique 4)

The lithium secondary battery according to technique 3, wherein
the insulating layer is disposed between the portion *a* and the separator.

### (Technique 5)

The lithium secondary battery according to technique 4, wherein
the insulating layer has a dimension in a width direction of the positive electrode that is larger than a dimension of the positive electrode in the width direction.

### (Technique 6)

The lithium secondary battery according to technique 5, wherein
the insulating layer is disposed so as to entirely cover the winding start end portion of the positive electrode.

### (Technique 7)

The lithium secondary battery according to any one of techniques 1 to 6, wherein
the insulating layer includes a resin material.

### (Technique 8)

The lithium secondary battery according to any one of techniques 1 to 7, wherein
the insulating layer has a thickness of 10 µm or more and 150 µm or less.

### (Technique 9)

The lithium secondary battery according to any one of techniques 1 to 8, wherein
the spacer is disposed on a principal surface of the substrate on the positive electrode side.

### (Technique 10)

The lithium secondary battery according to any one of techniques 1 to 9, wherein
the spacer includes the protruding portion arranged in a predetermined repeating pattern.

### (Technique 11)

The lithium secondary battery according to any one of techniques 1 to 10, wherein
a plurality of the protruding portions each having a linear shape are arranged so as to be spaced apart from and parallel to each other along a length direction of the substrate.

### (Technique 12)

The lithium secondary battery according to any one of techniques 1 to 11, wherein
the spacer includes a resin material.

### (Technique 13)

The lithium secondary battery according to any one of techniques 1 to 12, wherein
the spacer includes a non-porous structure that is impermeable to lithium ions.

### (Technique 14)

The lithium secondary battery according to any one of techniques 1 to 13, wherein
the substrate includes a porous sheet including a polymer material.

### (Technique 15)

The lithium secondary battery according to technique 14, wherein
the substrate further includes a composite material layer including a resin material and inorganic particles.

### [Examples]

Hereinafter, the lithium secondary battery according to the present disclosure will be described in further detail by way of examples and comparative examples. However, the present disclosure is not limited to the following examples.

### <<Batteries A1 to A4>>

### (Production of Positive Electrode)

A positive electrode active material, acetylene black (AB: conductive material), polyvinylidene fluoride (PVdF: binder), and an appropriate amount of N-methyl-2-pyrrolidone (NMP) were mixed to prepare a positive electrode mixture slurry. A rock-salt lithium-containing transition metal oxide (NCA: positive electrode active material) containing Li, Ni, Co, and Al (the molar ratio of Li to the sum of Ni, Co, and Al was 1.0), and having a layered structure was used as the positive electrode active material. In the positive electrode mixture slurry, the mass ratio NCA:AB:PVdF was 95:2.5:2.5. The positive electrode mixture slurry was applied to both surfaces of a band-shaped Al foil (positive electrode current collector), and the resulting coating film was dried and rolled, to form a positive electrode mixture layer. The positive electrode current collector with the positive electrode mixture layer formed on both surface thereof was cut into a predetermined size, to obtain a positive electrode.

### (Preparation of Negative Electrode Current Collector)

A band-shaped electrolytic copper foil (thickness: 12 µm) was prepared as a negative electrode current collector.

### (Production of Substrate)

A polyethylene microporous thin film having a thickness of 10 µm was prepared. A coating liquid including paraphenylene terephthalamide, which is aromatic polyamide, as a resin material, and alumina as inorganic particles was applied to one principal surface of the microporous thin film. For the coating liquid, an N-methyl-2-pyrrolidone solution in which 5.8 mass% of calcium chloride was dissolved was used, and the concentrations of the aromatic polyamide and the alumina were adjusted to 2 wt% and 4 wt%, respectively. The substrate with the coating film formed thereon was allowed to stand for one hour at a temperature of 25°C in an atmosphere with a relative humidity of 70%, thus precipitating the aromatic polyamide. Next, the NMP, the calcium chloride, and so forth contained in the coating film were removed by water washing. The coating film was dried for 5 minutes at 60°C, thus forming a composite material layer (heat-resistant layer). In this manner, a substrate including the microporous thin film and the composite material layer was obtained.

### (Formation of Spacer on Principal Surface of Substrate)

A coating liquid including polyvinylidene fluoride and alumina particles (inorganic filler) was applied onto the microporous thin film of the above-described substrate, and the resulting coating film was dried to form a spacer in a pattern (stripes) shown in FIG. 4. In this manner, a separator including the substrate and the spacer was obtained. The linear-shaped protruding portions constituting the spacer each had a width of 0.25 mm and a height of 30 µm.

### (Placement of Insulating Layer)

An insulating resin film made of polypropylene was prepared. The thickness of the resin film (insulating layer) was set to the values listed in Table 1. Insulating films were respectively attached to both surfaces (principal surfaces on the outer circumferential side and the inner circumferential side) of a winding start end portion E1 of the positive electrode. The dimension of the resin film in the width direction of the positive electrode was larger than the dimension of the positive electrode in the width direction thereof. Note that the resin film included an adhesive layer on the surface of a portion thereof in close contact with the positive electrode. In this manner, an insulating layer (insulating layer 63 shown in FIGS. 3 to 5) entirely covering the winding start end portion E1 of the positive electrode was placed.

### (Preparation of Non-Aqueous Electrolyte)

An ether-based solvent mixture including 1,2-dimethoxyethane (DME) and 1,1,2,2-tetrafluoroethyl 2,2,2-trifluoroethyl ether (CHF₂(CF₂OCH₂)CF₃) at a volume ratio of 1:2 was prepared. Lithium bis(fluorosulfonyl)imide (LiFSI) and LiBF₂(C₂O₄) were dissolved in the solvent mixture so as to have concentrations of 1 mol/L and 0.1 mol/L, respectively, to prepare a liquid non-aqueous electrolyte (ether-based electrolytic solution).

### (Assembly of Battery)

In an inert gas atmosphere, the positive electrode and the negative electrode current collector were spirally wound with the separator interposed therebetween, to produce an electrode group. At this time, the separator was disposed such that the principal surface of the substrate on the side on which the spacer was formed opposed the positive electrode. In this manner, a wound electrode group having the structure shown in FIG. 2 was obtained. The insulating layers (insulating layers 63 shown in FIGS. 3 to 5) were disposed on both sides of the winding start end portion E1 of the positive electrode. The electrode group was accommodated in a bottomed cylindrical case body, and the non-aqueous electrolyte was injected into the case body. A sealing body was disposed in an opening of the case body with a gasket interposed therebetween, and the electrode group and the non-aqueous electrolyte were sealed inside the battery case. In this manner, lithium secondary batteries (batteries A1 to A4) each having the structure shown in FIG. 1 were completed.

### <<Battery B1>>

A battery B1 was produced in the same manner as the battery A1, except that the insulating layers were not disposed on both sides of the winding start end portion E1 of the positive electrode.

### [Evaluation]

### (Charge-Discharge Test)

A charge-discharge test was performed for each of the obtained batteries. In the charge-discharge test, in a constant-temperature bath at a 25°C, each battery was charged under the following conditions, followed by a rest period of 20 minutes, and discharged under the following conditions.

### (Charging)

Constant-current charging was performed at a current of 10 mA per unit area (square centimeter) of the electrode until the battery voltage reached 4.1 V. Thereafter, constant-voltage charging was performed at voltage of 4.1 V until the current value per unit area of the electrode reached 1 mA.

### (Discharging)

Constant-current discharging was performed at a current of 10 mA per unit area (square centimeter) of the electrode until the battery voltage reached 3.0 V.

Charge-discharge was repeatedly performed taking the above-described charging and discharging taken as one cycle. When the charge capacity at the m-th cycle becomes greater than the charge capacity at the previous (m-1th) cycle by 1% or more, it was determined that abnormal charging occurred due to the occurrence of a micro-internal short circuit, and the charge-discharge test was ended. The cycle number m at this time was determined as an abnormality occurrence cycle number. The charge-discharge was performed until the discharge capacity reached 90% of the discharge capacity at the first cycle. If no abnormal charging occurred, it was determined that no abnormality occurred.

The evaluation results are shown in Table 1. Note that, in Table 1, A1 to A4 correspond to examples, and B1 corresponds to a comparative example.

**[Table 1]**

| Battery | Configuration | Spacer | Insulating layer | Insulating layer thickness (µm) | Abnormality occurrence cycle number |
|---|---|---|---|---|---|
| A1 | Positive electrode/Spacer/Substrate/Negative electrode | Stripe | Present | 200 | 150 |
| A2 | Positive electrode/Spacer/Substrate/Negative electrode | Stripe | Present | 50 | No abnormality |
| A3 | Positive electrode/Spacer/Substrate/Negative electrode | Stripe | Present | 100 | No abnormality |
| A4 | Positive electrode/Spacer/Substrate/Negative electrode | Stripe | Present | 150 | No abnormality |
| B1 | Positive electrode/Spacer/Substrate/Negative electrode | Stripe | Absent | - | 115 |

In the batteries A1 to A4, as compared with the battery B1, the abnormality occurrence cycle was delayed, and the occurrence of an internal short circuit was suppressed. In particular, no abnormality occurred in the batteries A2 to A4, and the effect of suppressing the occurrence of an internal short circuit was significantly achieved.

### [Industrial Applicability]

A lithium secondary battery according to the present disclosure can be used for, for example, electronic devices such as a mobile phone, a smartphone, and a tablet terminal, electric vehicles including a hybrid vehicle and a plug-in hybrid vehicle, and a home storage battery combined with a solar cell.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: lithium secondary battery, 11: positive electrode, 12: negative electrode, 14: electrode group, 14s: space, 15: case body, 16: sealing body, 23: lower valve body, 25: upper valve body, 50: substrate, 51: porous sheet, 52: composite material layer, 53: spacer, 53a: protruding portion, 62: portion overlapping protruding portion of positive electrode end portion E1, 63: insulating layer

## Claims

1. A lithium secondary battery comprising:
an electrode group including a positive electrode, a negative electrode, and a separator disposed between the positive electrode and the negative electrode; and
a non-aqueous electrolyte, wherein,
in the negative electrode, lithium metal is deposited during charging, and the lithium metal is dissolved in the non-aqueous electrolyte during discharging,
the separator includes a sheet-shaped substrate, and a spacer disposed on a principal surface of the substrate,
the spacer includes protruding portions,
an end portion of the positive electrode includes a portion A overlapping the protruding portion, and
an insulating layer is disposed between at least part of the portion A and the negative electrode.

2. The lithium secondary battery according to claim 1, comprising
the electrode group obtained by winding the positive electrode having a band shape and the negative electrode having a band shape with the separator interposed therebetween.

3. The lithium secondary battery according to claim 2, wherein
the end portion of the positive electrode includes a winding start end portion of the positive electrode,
the at least part of the portion A is a portion *a* corresponding to the winding start end portion of the positive electrode, and
the insulating layer is disposed between at least the portion *a* and the negative electrode.

4. The lithium secondary battery according to claim 3, wherein
the insulating layer is disposed between the portion *a* and the separator.

5. The lithium secondary battery according to claim 4, wherein
the insulating layer has a dimension in a width direction of the positive electrode that is larger than a dimension of the positive electrode in the width direction.

6. The lithium secondary battery according to claim 5, wherein
the insulating layer is disposed so as to entirely cover the winding start end portion of the positive electrode.

7. The lithium secondary battery according to any one of claims 1 to 6, wherein
the insulating layer includes a resin material.

8. The lithium secondary battery according to any one of claims 1 to 6, wherein
the insulating layer has a thickness of 10 µm or more and 150 µm or less.

9. The lithium secondary battery according to any one of claims 1 to 6, wherein
the spacer is disposed on a principal surface of the substrate on the positive electrode side.

10. The lithium secondary battery according to any one of claims 1 to 6, wherein
the spacer includes the protruding portions arranged in a predetermined repeating pattern.

11. The lithium secondary battery according to any one of claims 1 to 6, wherein
a plurality of the protruding portions each having a linear shape are arranged so as to be spaced apart from and parallel to each other along a length direction of the substrate.

12. The lithium secondary battery according to any one of claims 1 to 6, wherein
the spacer includes a resin material.

13. The lithium secondary battery according to any one of claims 1 to 6, wherein
the spacer includes a non-porous structure that is impermeable to lithium ions.

14. The lithium secondary battery according to any one of claims 1 to 6, wherein
the substrate includes a porous sheet including a polymer material.

15. The lithium secondary battery according to claim 14, wherein
the substrate further includes a composite material layer including a resin material and inorganic particles.
